# EUROPEAN PATENT APPLICATION

(11) **EP 3 685 913 A1**
(43) Date of publication of application: **29.07.2020**
(21) Application number: 19153336.3
(22) Date of filing: 23.01.2019
(51) Int. Cl.: B01J 13/12

(54) **MICROCAPSULES-CONTAINING COMPOSITION**

(71) Applicant: Solvay Specialty Polymers Italy S.p.A., 20021 Bollate (MI) (IT); Politecnico di Milano, 20133 Milano (IT)
(72) Inventor: BOUMEZGANE, Oussama, 41051 Castelnuovo Rangone (IT); DE CAMPO, Floryan, 20121 Milano (IT); TURRI, Stefano Ettore Romano, 20861 Brugherio (IT); SURIANO, Raffaella, 20131 Milano (IT); TONELLI, Claudio Adolfo Pietro, 23877 PADERNO D'ADDA (IT)
(74) Representative: Benvenuti, Federica

(57) **Abstract**

The invention pertains to a composition comprising: first microcapsules having a polymeric shell and a core containing a first polymer having two chain ends, each end comprising at least one ionisable acid group; second microcapsules having a polymeric shell and a core containing a second polymer having two chain ends, each end comprising at least one ionisable amino group; at least one curable polymer.

## Description

### Technical Field

The present invention relates to a composition comprising microcapsules and to a method for making said composition, to a microcapsule and to a method for making said microcapsule, to a coated article comprising a coating resulting for curing the above composition and to a method for making said article. In particular, the composition according to the present invention provides protection of metal surfaces against corrosion.

### Background Art

It is known that metals and alloys undergo corrosion when exposed to certain environmental conditions. Usually, metals undergo electrochemical oxidation by contact with an oxidant, like oxygen or sulphur, and convert to more stable forms, such as their oxides, hydroxides or sulphides. The most common example of electrochemical oxidation is rusting, which consists in the formation of iron oxides or salts on a metal surface and imparts a typical orange coloration.

A common method used to prevent the oxidation of metals and metal alloys is the application of a protective polymeric coating on their surface, which acts as a physical barrier against any potentially corrosive environment. However, during normal use, the coating undergoes stresses that may cause cracking. If cracking takes place, the metal surface becomes exposed and corrosion is likely to occur.

In order to prolong the life of metals and alloys against corrosion and preserve the properties of such materials, self-healing materials have been developed as protective polymeric coatings. Indeed, self-healing materials are able to automatically repair themselves after a damage and prevent corrosion of the underlying metallic surface by means of a healing process.

Self-healing materials often comprise microcapsules containing healing agents in an encapsulating container, and a host matrix incorporating said microcapsules. The self-healing process is therefore activated by the release of said healing agents after rupture of the encapsulating container.

For instance, European Polymer Journal 49 (2013) 2467-2476 discloses a self-healing system which comprises microcapsules containing reactive isocyanates encapsulated into a polyurethane and poly(ureaformaldehyde) container. However, said self-healing system has some technical issues. First, the synthesis of said self-healing system involves the handling of toxic products (i.e. formaldeyde and isocyanates). Furthermore, polyisocyanates are highly moisture sensitive and uncontrolled jellification with total loss of protective characteristics may occur, thus reducing the shelf-life of the microcapsules and their efficiency.

Need is therefore felt to provide a coating composition able to overcome the above mentioned drawbacks, while maintaining its anti-corrosive functions.

### Summary of invention

In a first aspect, the present invention relates to a composition [composition (C)] comprising:
- a plurality of first microcapsules [capsules (M1)], said capsules (M1) having a polymeric shell and a core containing at least one first polymer [polymer (P1)] comprising a polymer chain [chain (R)] consisting of a plurality of non-ionisable recurring units [units (U)], said polymer (P1) having two chain ends (E1, E1'), each end comprising at least one ionisable acid group;
- a plurality of second microcapsules [capsules (M2)], said capsules (M2) having a polymeric shell, said polymeric shell being equal to or different from that of capsules (M1), and a core containing at least one second polymer [polymer (P2)] comprising a polymer chain [chain (R)] consisting of a plurality of non-ionisable recurring units [units (U)], said chain (R) being equal to or different from that of polymer (P1), and said polymer (P2) having two chain ends (E2, E2'), each end comprising at least one ionisable amino group;
- at least one curable polymer [polymer (A)]:

In a second aspect, the present invention relates to a method for making the above defined composition, said method comprising mixing said first capsules (M1), said second capsules (M2) and said at least one curable polymer (A).

In a third aspect, the present invention relates to a microcapsule [capsule (M)] comprising a shell and a core, wherein: said core contains at least one polymer [polymer (P)] comprising a polymer chain [chain (R)] consisting of a plurality of non-ionisable recurring units [units (U)], said polymer having two chain ends, each end comprising at least one ionisable acid group or at least one ionisable amino group, and said shell is made from a polymer [polymer (Q)] different from said polymer (P).

In a forth aspect, the present invention relates to a method for making the above defined microcapsule, said method comprising the following steps:
i) dissolving said polymer (P) and said polymer (Q) in a suitable solvent immiscible with water, thus obtaining a solution [solution (S1)];
ii) mixing said solution (S1) with an aqueous solution containing a suitable colloidal stabilizer and a salt, said colloidal stabilizer being preferably polyvinyl alcohol and said salt being preferably sodium chloride, thus obtaining an emulsion [emulsion (E)];
iii) evaporating said solvent.

In a fifth aspect, the present invention relates to a method for making a coated article comprising a substrate having at least one metal surface [surface (S)], said method comprising:
i) applying the above defined composition (C) to at least part of said surface (S), and
ii) curing said composition (C).

In a sixth aspect, the present invention relates to a coated article comprising a substrate having at least one metal surface [surface (S)] and a coating resulting from curing the above defined composition (C), said coating being adhered to at least part of said surface (S).

### Detailed description of the invention

In the present description, unless otherwise indicated, the following terms are to be meant as follows.

An "alicyclic group" is an aliphatic cyclic group consisting of one or more all-carbon rings which may be either saturated or unsaturated.

The adjective "aromatic" denotes any mono- or polynuclear cyclic group (or moiety) having a number of π electrons equal to 4n+2, wherein n is 0 or any positive integer; an aromatic group (or moiety) can be an aryl or an arylene group (or moiety).

An "aromatic group" consists of one core composed of one benzenic ring or of a plurality of benzenic rings fused together by sharing two or more neighboring ring carbon atoms. Non limitative examples are benzene, naphthalene, anthracene, phenanthrene, tetracene, triphenylene, pyrene, perylene.

Alicyclic and aromatic groups can be substituted with one or more straight or branched alkyl or alkoxy groups and/or halogen atoms and/or can comprise one or more heteroatoms, like nitrogen, oxygen and sulfur, in the ring.

The use of parentheses "(...)" before and after the names of compounds, symbols or numbers identifying formulae or parts of formulae like, for example, "composition (C)", "capsules (M1)", etc..., has the mere purpose of better distinguishing those names, symbols or numbers from the remaining text; thus, said parentheses could also be omitted.

When ranges are indicated, range ends are included.

The expressions "ionisable amino group" and "ionisable acid groups" identify amino or acid groups able to form ionic groups, namely cationic and anionic groups respectively. In greater detail, an ionisable amino group identifies a primary, secondary or tertiary amino group, while an ionisable acid group identifies an acid group comprising at least one hydroxyl function in its protonated form, i.e. a protic acid group.

Preferably, polymers (P1) and (P2) are amorphous and have a glass transition temperature (T_{g}) lower than - 35 °C, preferably from - 35 °C to - 120 °C.

Preferably, the ratio between the equivalents of polymer (P1) and the equivalents of polymer (P2) ranges from 1.4 to 0.6, more preferably from 1.2 to 0.8, even more preferably from 1.1 to 0.9.

### POLYMER (P1)

As said, polymer (P1) comprises a polymer chain [chain (R)] consisting of a plurality of non-ionisable recurring units [units (U)] and two chain ends (E1, E1'), each end comprising at least one ionisable acid group.

### Chain ends E1 and E1'

Chain ends E1 and E1' preferably comprise at least one ionisable acid group selected among carboxylic acid groups, phosphonic acid groups and sulfonic acid groups. Each of said ionisable acid groups is able to form an anionic group via acid/base reaction with the at least one ionisable amino group at one end of polymer (P2).

Preferably, groups E1 and E1' are equal to one another.

Preferably, groups E1 and E1' comply with formula (E1-A) here below:

(E1-A) -B1-(E_{A})ₘ

wherein:
E_{A} represents a -COOH, a -P(O)(OR_{EA})₂ or a -S(O)₂OH group, wherein one of R_{EA} is hydrogen and the other one is hydrogen or straight or branched alkyl, preferably C₁-C₄ alkyl;
m is a positive number equal to or higher than 1, m being preferably 2;
B1 is a hydrocarbon group preferably comprising from 1 to 20 carbon atoms and possibly comprising one or more than one heteroatom, said heteroatom(s) being preferably selected among N, S and O.

Preferably, B1 comprises at least one cyclic hydrocarbon group, which may be selected from: alicyclic groups, aromatic groups, heterocyclic groups comprising one or more than one heteroatom, and heteroaromatic groups comprising one or more than one heteroatom, said one or more than one heteroatom being preferably selected from N, S and O. Said at least one cyclic hydrocarbon group may comprise one or more substituents. In case B1 comprises more than one cyclic group, i.e. at least two cyclic groups, said cyclic groups may be condensed or may be connected through a bond or through any (hydro)carbon divalent group optionally comprising one or more than one heteroatom, said heteroatom(s) being preferably selected from N, S and O.

Preferably, B1 comprises one or more of the groups selected from: -O-,-S-, -OC(O)O-, -OC(O)NH-, -NH-C(O)-, OC(O)S-, -SC(O)S-, -NHC(O)NH-, -NH-C(=S) and -NHC(S)NH-.

Preferably, B1 complies with the formula here below:

-(CH₂)_{ns*}NHC(O)-R_{B1}-

wherein ns* is 0 or a positive number equal to or higher than 1, preferably ranging from 1 to 10, and R_{B1} is a C₁-C₁₀ straight or branched aliphatic group, a C₄-C₆ alicyclic group or heterocyclic group, a C₅-C₆ aromatic group or heteroaromatic group.

### Chain (R)

Chain (R) is independently selected from a fully or partially fluorinated polyoxyalkylene chain, a polyalkylsiloxane chain, a polyoxyalkylene chain, a polycarbonate chain, a polyester chain and a polybutdiene chain.

Preferably, said chain (R) is a polyalkylsiloxane chain [chain (R_{S})] comprising recurring units [units (U_{S})], equal to or different from each other, of formula:

(U_{S})

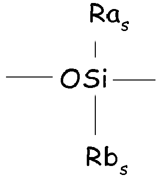

wherein Raₛ and Rbₛ, equal to or different from one another, are independently selected from hydrogen, straight or branched (halo)alkyl and aryl, with the proviso that at least one of Raₛ and Rbₛ is not hydrogen, Raₛ and Rbₛ being preferably straight or branched alkyl groups comprising from 1 to 4 carbon atoms, Raₛ and Rbₛ being preferably methyl groups.

In a preferred embodiment, said chain (R_{S}) has formula (R_{S}-I) here below:

Si(CH₃)₂O[Si(CH₃)₂O]ₙₛSi(CH₃)₂ (R_{S}-I)

with ns being a positive number selected in such a way that the number average molecular weight (Mₙ) of the [Si(CH₃)₂Oₙₛ chain preferably ranges from 500 to 10,000, more preferably from 500 to 5,000.

Minor amounts (e.g. <1 %(wt), based on the weight of chain (R_{S}-I) of spurious units, defects or recurring unit impurities may be comprised in chain (R_{S}-I) without this affecting chemical properties of this chain.

According to a preferred embodiment, polymer (P1) complies with the following formula (P1-A) here below:

(P1-A) R_{S}[(CH₂)_{ns*}NHC(O)-R_{B1}-(COOH)₂]₂

wherein R_{S} has formula (R_{S}-I) above and ns* and R_{B1} are as defined above. Preferably, R_{B1} is an aromatic group. More preferably, R_{B1} is a C₆ aromatic group. According to different embodiments, each -COOH group may be in ortho, meta, para positions with respect to -NHC(O)-. According to different embodiments, each -COOH group may be in ortho, meta, para positions with respect to each other.

A preferred example of polymer (P1-A) is the one complying with formula (P1-Aa) here below:

### (P1-Aa)

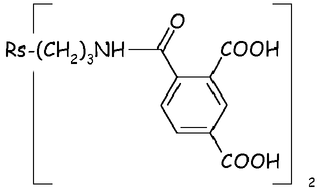

### POLYMER (P2)

As said, polymer (P2) comprises a polymer chain [chain (R)] consisting of a plurality of non-ionisable recurring units [units (U)] and two chain ends (E2, E2'), each end comprising at least one ionisable amino group.

### Chain ends E2 and E2'

Chain ends E2 and E2' preferably comprise at least one ionisable amino group selected among primary, secondary or tertiary amino groups. "Ionisable primary, secondary or tertiary amino group" means that the amino group is in its free form, so that it is capable to form a cationic group via acid/base reaction with the at least one acid group at one end of the polymer (P1).

Preferably, groups E2 and E2' are equal to one another.

Preferably, groups E2 and E2' comply with formula (E2-A) here below:

(E2-A) -B2-(N(R_{P2})₂)ₚ

wherein:
each of R_{P2}, equal to or different from each other at each occurrence, is hydrogen or straight or branched alkyl, preferably C₁-C₄ alkyl;
p is a positive number equal to or higher than 1, p being preferably 1;
B2 is a hydrocarbon group preferably comprising from 1 to 20 carbon atoms and optionally comprising one or more than one heteroatom, said heteroatom(s) being preferably selected among N, S and O.

B2 optionally comprises one or more than one cyclic hydrocarbon group, which may be alicyclic group(s), aromatic group(s), heterocyclic group(s) comprising one or more than one heteroatom, and heteroaromatic group(s) comprising one or more than one heteroatom, the heteroatom(s) being preferably selected from N, S and O. Each of said cyclic hydrocarbon groups may comprise one or more substituents. In case B2 comprises more than one cyclic group, i.e. at least two cyclic gropus, said cyclic groups may be condensed or may be connected through a bond or through any (hydro)carbon divalent group possibly comprising one or more than one heteroatom, said heteroatom(s) being preferably selected from N, S and O.

B2 optionally comprises one or more than one group selected from the following: -O-, -S-, -OC(O)O-, -OC(O)NH-, -NH-C(O)-, OC(O)S-, -SC(O)S-, -NHC(O)NH-, -NHC(S)NH-, -N(R_{P2*})- wherein R_{P2*} represents hydrogen or straight or branched alkyl, preferably C₁-C₄ alkyl, more preferably methyl.

### Chain (R)

Chain (R) is as defined above for polymer (P1).

According to a preferred embodiment, polymer (P2) complies with the following formula (P2-A) here below:

(P2-A) R_{S}[(CH₂)ₙₛ^{#}-NH₂]₂

wherein R_{S} has formula (R_{S}-I) above and ns^{#} is a positive number from 1 to 20, preferably from 1 to 10.

A preferred example of polymer (P2-A) is the one complying with formula (P2-Aa) here below:

### (P2-Aa)

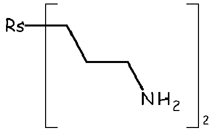

### POLYMER (A)

Preferably, said polymer (A) is an epoxy resin.

### CAPSULE (M1) AND CAPSULE (M2)

As said, the composition (C) comprises a plurality of first microcapsules [capsules (M1)] and a plurality of second microcapsules [(capsules (M2)] having a polymeric shell and a core containing polymer (P1) and polymer (P2), respectively.

According to a particular embodiment, the core of said capsules (M1) and/or the core of said capsules (M2) further contain(s) a solvent, which advantageously reduces the viscosity of polymer (P1) and/or polymer (P2), respectively. Said solvent is preferably dodecane. The amount of said solvent preferably ranges from 10 to 60 phr, preferably from 20 to 50 phr, based on 100 weight part of the polymer (P1) or polymer (P2).

Said capsules (M1) and (M2) have a diameter preferably ranging from 20 to100 µm, more preferably from 20 to 80 µm. The average diameter of said capsules (M1) and (M2) preferably ranges from 50 to 70 µm, more preferably from 55 to 65 µm, even more preferably is of about 60 µm.

The core of said capsules (M1) and (M2) is in an amount preferably ranging from 30 to 70%(wt), more preferably from 40 to 60%(wt), even more preferably from 45 to 50%(wt), based on the total weight of each capsule.

The polymeric shell of said capsules (M1) and (M2) preferably comprises, more preferably essentially consists of, poly(methyl methacrylate).

The polymeric shell of said capsules (M1) and (M2) has an average thickness preferably ranging from 15 to 30 µm, more preferably from 20 to 25 µm. Said average thickness was calculated by subtracting the volume occupied by the core of said capsules, as determined by thermogravimetric analysis (TGA) analysis, from the average diameter of the capsules, as determined by optical and SEM analyses.

The amount of said capsules (M1) and (M2) preferably ranges from 1 to 50 phr, more preferably from 2 to 30 phr, even more preferably from 10 to 20 phr, based on 100 weight part of the polymer (A).

As said, the present invention also relates to microcapsules [capsules (M)] comprising a shell and a core wherein: said core contains at least one polymer [polymer (P)] comprising a polymer chain [chain (R)] consisting of a plurality of non-ionisable recurring units [units (U)], said polymer having two chain ends, each end comprising at least one ionisable acid group or at least one ionisable amino group, and said shell is made from a polymer [polymer (Q)] different from said polymer (P). Said capsules (M) include both capsules (M1) and capsules (M2).

As already said, the present invention further relates to a method for making said capsules (M). As said, the method for making said capsules (M) comprises: dissolving said polymer (P) and said polymer (Q) in a suitable solvent immiscible with water, thus obtaining a solution [solution (S1)]; mixing said solution (S1) with an aqueous solution containing a suitable colloidal stabilizer and a salt, said colloidal stabilizer being preferably polyvinyl alcohol and said salt being preferably sodium chloride, thus obtaining an emulsion [emulsion (E)]; evaporating said solvent.

Preferably, the solvent used to dissolve polymer (P) and polymer (Q) is dichloromethane. The weight ratio between polymer (P) and polymer (Q) is preferably from 2 to 4, more preferably from 2 to 3. Preferably, the content of polymer (P) and polymer (Q) in said solvent is from 10 to 15%(wt), preferably from 13 to 14%(wt). Preferably, the colloidal stabilizer is in an amount from 1 to 5%(wt) based on the aqueous solution. Preferably, the salt is in an amount of 1 to 5%(wt) based on the aqueous solution. The solution obtained by dissolving polymer (P) and polymer (Q) is mixed with the stabilizer- and salt-containing aqueous solution at a rotation speed ranging preferably from 500 to 700 rpm, more preferably of about 600 rpm.

The Applicant has surprisingly found that by applying said method, it was possible to obtain a core loading ranging from 30 to 70%(wt), preferably from 40 to 60%(wt), more preferably from 45 to 50%(wt), based on the total weight of each capsule (M).

As said, the present invention also relates to a coated article comprising a substrate having at least one metal surface [surface (S)] and a coating resulting from curing of the composition (C), said coating being adhered to at least part of said surface (S). According to a particular embodiment, said coated articles also comprises a primer, said primer being preferably a polyester primer.

As said, the present invention further relates to a method for making a coated article comprising a substrate having at least one metal surface [surface (S)], said method comprising: i) applying the composition (C) to at least part of said surface (S), and ii) curing said composition (C). According to a particular embodiment, said method further comprises applying a primer to said at least part of the surface (S) before applying the composition (C) itself. Preferably, said primer is a polyester primer.

Without being bound by theory, it is believed that, when the coating is scratched and the microcapsules release polymers (P1) and (P2), the ionisable acid group(s) at each end of polymer (P1) undergo acid/base reaction with the ionisable amino group(s) at each end of polymer (P2) thus generating a supramolecular polymer network which protects the surface (S) from corrosion.

The invention will now be described with reference to the following examples, whose purpose is merely illustrative and not intended to limit the scope of the invention.

### Experimental section

### Materials

Polymer [herein after (Ps-Am)] of formula: 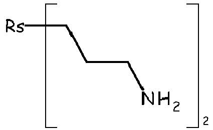 with Rs being a poly(dimethylsiloxane) chain, Mn = 3000, EW = 1500 was purchased from Aldrich® and used as received.

Trimellitic anhydride, polyvinyl alcohol, sodium chloride and poly(methyl mathacrylate) with Mw = 350'000 Da were purchased from Aldrich® and used as received.

Polyester primer NOVA sx 1483-B was purchased from Novaresine.

Epoxi resin Araldite By 158 was purchased from Huntsman.

### Methods

### Optical and SEM micrograph

The samples for the optical and SEM micrograph were prepared according to the following procedure. A few milligrams of microcapsules obtained according to the procedure described below were dispersed in hexane and put under sonication. The dispersed microcapsules were subsequently dropped in a microscope slide and dried under fume hood.

Optical and SEM micrograph was performed on a SEM Stereoscan 360.

### Thermogravimetric analysis (TGA)

TGA was carried out in a temperature range from 20 °C to 800 °C with a heating rate of 10 °C min, under nitrogen atmosphere.

### Corrosion test

The samples for the corrosion tests were prepared according to the following procedure. A 1 mils thick film of polyester primer NOVA sx 1483-B was deposited on a Q-panel of bare steel as an inter-layer and then cured at 200 °C for about 40 minutes. Then, an 8 mils thick film of epoxy resin Araldite By 158 or of a composition C1-C3 prepared according to the procedure described below was deposited on said Q-panel and let cure for 24 hours. Q-panels of bare steels were used after being properly washed and sonicated in an ethanol bath.

The corrosion tests were performed after scratching down the film coatings by using a tip and throughout the film thickness.

The corrosion tests were performed by immersing the samples in a 0.5 M NaCl solution for 24 hours, with and without a thermal treatment before immersion.

The corrosion behaviour of the samples is rated after visual evaluation of the scratched area, with the following ranking:
A: complete corrosion;
B: corrosion area greater than 50%;
C: corrosion area less or equal 50%;
D: no corrosion.

### DSC analysis

The glass transition temperature (T_{g}) was determined according to ASTM D3418 by means of a Perkin-Elmer DSC 2C Instrument, and reported as midpoint by scans between -160 °C and 20 °C at a scanning speed of 20 °C/min; the low temperature range was calibrated with reagent grade n-hexane.

### ¹³C and ¹H NMR

NMR analyses were performed on a Bruker Avance™ 400 MHz spectrometer with a 5 mm probe and the obtained spectra were processed using Bruker's TopSpin™ software (3.2 ver.). The polymer structures were determined by ¹H or ¹³C NMR analyses.

### Synthesis examples

Synthesis of a polymer (Ps-Ac) of formula: 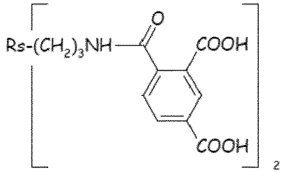 wherein Rs is a poly(dimethylsiloxane) chain, Mw = 3438 and EW = 860.

A glass reactor was charged with polymer (Ps-Am) (20 g, 13 meq), warmed up to 70°C under mechanical stirring and subsequently dried under vacuum for two hours. Trimellitic anhydride (3.0 g, 15 meq) was melted at 40°C and added in the glass reactor. The reaction mass was warmed up to 130°C and kept at this temperature for two hours. The completion of the reaction was monitored by ¹H-NMR. The NMR analyses confirmed the obtainment of title product, with purity higher than 98%. The product, consistently with its formula above, comprises 4 ionizable carboxylic groups per molecule. The material appears as opaque viscous liquid. DSC shows that the product has a T_{g} of -115°C.

### Example 1 - Preparation of microcapsules comprising a poly(methyl methacrylate) shell and a polymer (Ps-Am)-containing core

An aqueous solution containing 1%(wt) of polyvinyl alcohol and 3%(wt) of NaCl was prepared and kept under mechanical stirring at around 700 rpm for about 20 minutes. 6 g of polymer (Ps-Am) and 2 g of poly(methyl methacrylate) were dissolved in 50 ml of dichloromethane, thus obtaining a solution. The latter was added to 250 ml of said aqueous solution at a rotation speed of 600 rpm for about 1 hour, thus obtaining an emulsion. Said emulsion was then poured into other 125 ml of said aqueous solution and kept overnight under fume hood and agitation speed of about 300 rpm for solvent evaporation, thus obtaining microcapsules. The so obtained microcapsules were then filtrated, washed with distilled water and hexane to remove non-encapsulated polymer (Ps-Am) and dried under vacuum at 50 °C.

TGA revealed a core loading of about 48%(wt) and the optical and SEM micrograph a diameter from 20 to 70 µm.

### Example 2 - Preparation of microcapsules comprising a poly(methyl methacrylate) shell and a polymer (Ps-Ac)-containing core

A mixture comprising polymer (Ps-Ac) and 20 phr of dodecane was prepared; said mixture will be referred to below as (Ps-Ac)-20. An aqueous solution containing 1%(wt) of polyvinyl alcohol and 3%(wt) of NaCl was prepared and kept under mechanical stirring at around 700 rpm for about 20 minutes.

4 g of (Ps-Ac)-20 and 2 g of poly(methyl methacrylate) were dissolved in 40 ml of dichloromethane, thus obtaining a solution. The latter was added to 250 ml of said aqueous solution at a rotation speed of 600 rpm for about 1 hour, thus obtaining an emulsion. Said emulsion was then poured into other 125 ml of said aqueous solution and kept overnight under fume hood and agitation speed of about 300 rpm for solvent evaporation, thus obtaining microcapsules. The so obtained microcapsules were then filtrated, washed with distilled water and hexane and dried under vacuum at 50 °C.

TGA revealed a core loading of about 48%(wt) and the optical. SEM and optical micrograph showed spherical microcapsules with a diameter from 20 to 80 µm, with a few microcapsules having a diameter of about 100 µm, and a smooth surface.

### Example 3 - Preparation of microcapsules comprising a poly(methyl methacrylate) shell and a polymer (Ps-Ac)-containing core

A mixture comprising polymer (Ps-Ac) and 40 phr of dodecane was prepared; said mixture will be referred to below as (Ps-Ac)-40. An aqueous solution containing 1%(wt) of polyvinyl alcohol and 3%(wt) of NaCl was prepared and kept under mechanical stirring at around 700 rpm for about 20 minutes.

4 g of (Ps-Ac)-40 and 2 g of poly(methyl methacrylate) were dissolved in 40 ml of dichloromethane, thus obtaining a solution. The latter was added to 250 ml of said aqueous solution at a rotation speed of 600 rpm for about 1 hour, thus obtaining an emulsion. Said emulsion was then poured into other 125 ml of said aqueous solution and kept overnight under fume hood and agitation speed of about 300 rpm for solvent evaporation, thus obtaining microcapsules. The so obtained microcapsules were then filtrated, washed with distilled water and hexane and dried under vacuum at 50 °C.

TGA revealed a core loading of about 45%(wt) and the optical and SEM micrograph a diameter from 20 to 70 µm.

### Example 4 - Preparation of microcapsules comprising a poly(methyl methacrylate) shell and a polymer (Ps-Ac)-containing core

A mixture comprising polymer (Ps-Ac) and 50 phr of dodecane was prepared; said mixture will be referred to below as (Ps-Ac)-50. An aqueous solution containing 1%(wt) of polyvinyl alcohol and 3%(wt) of NaCl was prepared and kept under mechanical stirring at around 700 rpm for about 20 minutes.

4 g of (Ps-Ac)-50 and 2 g of poly(methyl methacrylate) were dissolved in 40 ml of dichloromethane, thus obtaining a solution. The latter was added to 250 ml of said aqueous solution at a rotation speed of 600 rpm for about 1 hour, thus obtaining an emulsion. Said emulsion was then poured into other 125 ml of said aqueous solution and kept overnight under fume hood and agitation speed of about 300 rpm for solvent evaporation, thus obtaining microcapsules. The so obtained microcapsules were then filtrated, washed with distilled water and hexane and dried under vacuum at 50 °C.

TGA revealed a core loading of about 40%(wt) and the optical and SEM micrograph a diameter from 20 to 70 µm.

### Preparation of compositions C1-C3

Microcapsules of Ex.1 and microcapsules of Ex.2 were incorporated in the epoxy resin Araldite By 158 at 20 phr content and in a weight ratio of 2, thus obtaining a composition referred to below as composition C1.

Microcapsules of Ex.1 and microcapsules of Ex.3 were incorporated in the epoxy resin Araldite By 158 at 20 phr content and in a weight ratio of 2, thus obtaining a composition referred to below as composition C2.

Microcapsules of Ex.1 and microcapsules of Ex.4 were incorporated in the epoxy resin Araldite By 158 at 20 phr content and in a weight ratio of 2, thus obtaining a composition referred to below as composition C3.

### Corrosion test results

**Table 1 shows the entire set of trials carried out with the compositions C1-C3 according to the invention and with the epoxy resin Araldite By 158.**

| Composition | T before immersion [°C] | t before immersion [h] | Rank |
|---|---|---|---|
| C1 | 20 | 0 | C |
| C2 | 20 | 0 | D |
| C3 | 20 | 0 | D |
| C1 | 70 | 2 | D |
| Epoxy resin Araldite By 158 | 20 | 0 | A |
| Epoxy resin Araldite By 158 | 70 | 2 | A |

As evident from Table 1, the compositions C1 to C3, which are object of the present invention, provide for a better protection of the metal surface. Best results were obtained with composition C1 and thermal treatment before immersion and with compositions C2 and C3 and no thermal treatment before immersion.

## Claims

1. A composition [composition (C)] comprising:
- a plurality of first microcapsules [capsules (M1)], said capsules (M1) having a polymeric shell and a core containing at least one first polymer [polymer (P1)] comprising a polymer chain [chain (R)] consisting of a plurality of non-ionisable recurring units [units (U)], said polymer (P1) having two chain ends (E1, E1'), each end comprising at least one ionisable acid group.
- a plurality of second microcapsules [capsules (M2)], said capsules (M2) having a polymeric shell, said polymeric shell being equal to or different from that of capsules (M1), and a core containing at least one second polymer [polymer (P2)] comprising a polymer chain [chain (R)] consisting of a plurality of non-ionisable recurring units [units (U)], said chain (R) being equal to or different from that of polymer (P1), and said polymer (P2) having two chain ends (E2, E2'), each end comprising at least one ionisable amino group.
- at least one curable polymer [polymer (A)].

2. The composition (C) according to claim 1, wherein said polymers (P1) and (P2) are amorphous and have a T_{g} lower than -35 °C, preferably from -35 °C to -120 °C, and wherein the ratio between the equivalents of polymer (P1) and the equivalents of polymer (P2) preferably ranges from 1.4 to 0.6, more preferably from 1.2 to 0.8, even more preferably from 1.1 to 0.9.

3. The composition (C) according to claim 1 or 2, wherein the chain ends (E1, E1') of polymer (P1), equal to or different from each other, comply with the following formula (E1-A):
(E1-A) -B1-(E_{A})ₘ
wherein:
E_{A} represents a -COOH, a -P(O)(OR_{EA})₂ or a -S(O)₂OH group, wherein one of R_{EA} is hydrogen and the other one is hydrogen or straight or branched alkyl, preferably C₁-C₄ alkyl;
m is a positive number equal to or higher than 1, m preferably being 2;
B1 is a hydrocarbon group preferably comprising from 1 to 20 carbon atoms and possibly comprising one or more than one heteroatom, said heteroatom(s) being preferably selected among N, S and O;
B1 preferably comprises at least one cyclic hydrocarbon group, said cyclic hydrocarbon group being preferably selected from: alicyclic groups, aromatic groups, heterocyclic groups and heteroaromatic groups;
B1 preferably comprises one or more of the groups selected from: -O-, -S-, -OC(O)O-, -OC(O)NH-, -NH-C(O)-, OC(O)S-, -SC(O)S-, -NHC(O)NH-, -NH-C(=S) and -NHC(S)NH-;
B1 preferably has the following formula:
-(CH₂)_{ns*}NHC(O)-R_{B1}-
wherein ns* is 0 or a positive number equal to or higher than 1, preferably ranging from 1 to 10, and R_{B1} is a C₁-C₁₀ straight or branched aliphatic group, a C₄-C₆ alicyclic group or heterocyclic group, a C₅-C₆ aromatic group or heteroaromatic group.

4. The composition (C) according to any of the previous claims, wherein the chain ends (E2, E2') of polymer (P2), equal to or different from each other, comply with the following formula (E2-A):
(E2-A) -B2-(N(R_{P2})₂)ₚ
wherein:
each of R_{P2}, equal to or different from each other at each occurrence, is hydrogen or straight or branched alkyl, preferably C₁-C₄ alkyl;
p is a positive number equal to or higher than 1, p preferably being 1;
B2 is a hydrocarbon group preferably comprising from 1 to 20 carbon atoms and optionally comprising one or more than one heteroatom, said heteroatom(s) being preferably selected among N, S and O;
B2 optionally comprises at least one cyclic hydrocarbon group, said cyclic hydrocarbon group being preferably selected from: alicyclic groups, aromatic groups, heterocyclic groups and heteroaromatic groups;
B2 optionally comprises one or more of the groups selected from: -O-, -S-,-OC(O)O-, -OC(O)NH-, -NH-C(O)-, OC(O)S-, -SC(O)S-, -NHC(O)NH-,-NHC(S)NH-, -N(R_{P2*})- wherein R_{P2*} represents hydrogen or straight or branched alkyl, preferably C₁-C₄ alkyl, more preferably methyl.

5. The composition (C) according to any of the previous claims, wherein the chain (R) of said polymers (P1) and (P2) is independently selected from a fully or partially fluorinated polyoxyalkylene chain, a polyalkylsiloxane chain, a polyoxyalkylene chain, a polycarbonate chain, a polyester chain and a polybutadiene chain.

6. The composition (C) according to claim 5, wherein the chain (R) of both polymers (P1) and (P2) is a polyalkylsiloxane chain [chain (R_{S})] comprising recurring units [units (U_{S})], equal to or different from each other, of formula: (U_{S}) 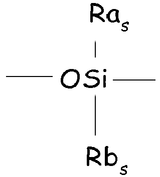
wherein Raₛ and Rbₛ, equal to or different from one another, are independently selected from hydrogen, straight or branched (halo)alkyl and aryl, with the proviso that at least one of Raₛ and Rbₛ is not hydrogen,
Raₛ and Rbₛ being preferably straight or branched alkyl groups comprising from 1 to 4 carbon atoms,
Raₛ and Rbₛ being preferably methyl groups.

7. The composition (C) according to claim 6, wherein said chain (R_{S}) has formula (R_{S}-I):
Si(CH₃)₂O[Si(CH₃)₂O]ₙₛSi(CH₃)₂ (R_{S}-I)
with ns being a positive number selected in such a way that the number average molecular weight (Mₙ) of the [Si(CH₃)₂O]ₙₛ chain preferably ranges from 500 to 10,000, more preferably from 500 to 5,000.

8. The composition (C) according to claim 6 or 7, wherein polymer (P1) complies with formula: 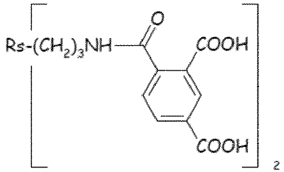 and/or polymer (P2) complies with formula:

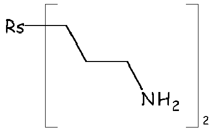

9. The composition (C) according to any of the previous claims, wherein said polymer (A) is an epoxy resin.

10. The composition (C) according to any of the previous claims, wherein the core of said capsules (M1) and (M2) is in an amount ranging from 30 to 70%(wt), preferably from 40 to 60%(wt), more preferably from 45 to 50%(wt), based on the total weight of each capsule.

11. The composition (C) according to any of the previous claims, wherein the polymeric shell of said capsules (M1) and (M2) comprises, preferably essentially consists of, poly(methyl methacrylate).

12. The composition (C) according to any of the previous claims, wherein: said capsules (M1) and (M2) have an average diameter ranging from 50 to 70 µm, preferably from 55 to 65 µm, more preferably of around 60 µm, and/or the polymeric shell of said capsules (M1) and (M2) has an average thickness ranging from 15 to 30 µm, preferably from 20 to 25 µm, and/or the amount of said capsules (M1) and (M2) ranges from 1 to 50 phr, preferably from 2 to 30 phr, more preferably from 10 to 20 phr, based on 100 weight part of the polymer (A).

13. A method for making the composition (C) according to any of the previous claims, comprising mixing said first capsules (M1), said second capsules (M2) and said at least one curable polymer (A).

14. A microcapsule [capsule (M)] comprising a shell and a core, wherein:
said core contains at least one polymer [polymer (P)] comprising a polymer chain [chain (R)] consisting of a plurality of non-ionisable recurring units [units (U)], said polymer having two chain ends, each end comprising at least one ionisable acid group or at least one ionisable amino group, and said shell is made from a polymer [polymer (Q)] different from said polymer (P).

15. A method for making the capsule (M) according to claim 14, comprising the following steps:
i) dissolving said polymer (P) and said polymer (Q) in a suitable solvent immiscible with water, thus obtaining a solution [solution (S1)];
ii) mixing said solution (S1) with an aqueous solution containing a suitable colloidal stabilizer and a salt, said colloidal stabilizer being preferably polyvinyl alcohol and said salt being preferably sodium chloride, thus obtaining an emulsion [emulsion (E)];
iii) evaporating said solvent.

16. The method according to claim 15, wherein said solvent is dichloromethane and/or the weight ratio between polymer (P) and polymer (Q) is from 2 to 4, preferably from 2 to 3, and/or the content of polymer (P) and polymer (Q) in said solvent is from 10 to 15%(wt), preferably from 13 to 14%(wt), and/or said colloidal stabilizer is in an amount from 1 to 5%(wt) based on the aqueous solution and/or said salt is in an amount of 1 to 5%(wt) based on the aqueous solution and/or said step ii) is carried out at a rotation speed from 500 to 700 rpm, preferably of about 600 rpm.

17. A method for making a coated article comprising a substrate having at least one metal surface [surface (S)], said method comprising:
i) applying the composition (C) according to any of claims 1 to 12 to at least part of the surface (S), and
ii) curing said composition (C).

18. A coated article comprising a substrate having at least one metal surface [surface (S)] and a coating resulting from curing of composition (C) according to any of claims 1 to 12, said coating being adhered to at least part of said surface (S).
